# EUROPEAN PATENT SPECIFICATION

(11) **EP 3 250 412 B1**
(45) Date of publication and mention of the grant of the patent: **31.10.2018**
(21) Application number: 16730042.5
(22) Date of filing: 22.04.2016
(51) Int. Cl.: B60N 2/07, B60N 2/08

(54) **SEAT ADJUSTMENT MECHANISM**
SITZEINSTELLMECHANISMUS
MÉCANISME DE RÉGLAGE DE SIÈGE

(43) Date of publication of application: 06.12.2017
(73) Proprietor: Assan Hanil Otomotiv Sanayi Ve Ticaret Anonim Sirketi, 41305 Izmit/Kocaeli (TR)
(72) Inventor: DEMIREL, Onur Emre, Kocaeli (TR); SEVER, Selçuk, Kocaeli (TR)
(74) Representative: Yamankaradeniz, Kemal
(86) International application number: PCT/TR2016/050124
(87) International publication number: WO 2017/184092

(56) References cited:
- EP-A1- 2 705 979
- DE-A1- 4 304 456
- DE-A1-102008 062 085

## Description

### Technical Field

The invention relates to a mechanism used in vehicle seats to provide comfort by means of adjustment of the seating part of the vehicle seat by the user.

### State of the Art

In the state of the art embodiments, while a vehicle is moving on hard terrain conditions, the perforated step sheet with spring characteristics may be dislocated, and as a result, with the release of the lock, the seat group may come loose. Therefore, said seat group may cause an accident, since it can move back-and-forth.

As a result, the above said drawbacks and the inadequacy of the prior art solutions about the subject have necessitated an improvement in the related technical field.

### Purpose of the Invention

The invention is formed with the inspiration from the prior art situations and aims to solve the above said problems.

The main purpose of the invention is to improve strength and safety compared to the prior art, with the use of a pull-wire. Unless the pull-wire is driven by the user, the mechanism does not operate, and therefore, safe travel of the user is ensured.

Another purpose of the invention is to provide the user with easy customization characteristics with the adjustability of the vehicle seat.

Another purpose of the invention is to provide strength and safety and ensure ease of use and mounting compared to the prior art embodiments.

In order to achieve the above said purposes, the invention is a seat adjustment mechanism comprising:
- a motion lever driven by a user, and on which:
   ∘ a first lever opening, enabling its rotation around a motion shaft, upward movement from its position within a lever housing by being connected via said motion shaft and a housing opening, and returning to its original position when the user ceases contact,
   ∘ a second lever opening connected to a pull-wire first wire ball
   are positioned,
- said motion shaft rotating said motion lever around its own axis within said lever housing, and the position of which is fixed by means of a shaft connection segment,
- a lever housing in which said motion lever is positioned via said first lever opening, housing opening, and motion shaft,
- a seat sheet, which moves forward or backward on a front support sheet, and to which a step sheet is connected by means of a second sheet opening and a rivet,
- said step sheet, on which:
   ∘ a first sheet opening, from which the upper part of a step pin is removed with the downward movement of said step pin and thus said seat sheet is released, and into which the upper part of said step pin is inserted with the release of a spring and thus said seat sheet is fixed,
   ∘ a second sheet opening providing its connection with said seat sheet,
   ∘ a rivet connecting said seat sheet and said second sheet opening are positioned,
- said front support sheet, on which:
   ∘ a first sheet opening through which the upper part of said step pin passes,
   ∘ a second sheet opening through which the lower part of said step pin passes,
   ∘ a third sheet opening that is connected to a wire pipe, through which said pull-wire passes, through said first pipe protrusion and second pipe protrusion positioned on said wire pipe
   are positioned, and said seat sheet moves back-and-forth with the upper part of said step pin entering into and coming out of said seat sheet 1,
and it is characterized in that; said seat adjustment mechanism comprises:
- said pull-wire, on which:
   ∘ said first wire ball enabling its connection with the lower part of said motion lever by means an upward movement of said motion lever via said second lever opening and a plastic connection piece,
   ∘ a second wire ball that is connected to a motion sheet from the lower part, by means of a motion second sheet opening positioned at the lower part of said motion sheet,
   ∘ said wire pipe connected to said front support sheet through said first pipe protrusion and second pipe protrusion positioned thereon, by means of said third sheet opening positioned on said front support sheet
   are positioned, and which moves within said wire pipe when the user drives said motion button and is released when the user releases the drive,
- said plastic connection piece connecting said pull-wire first wire ball with said second lever opening found at the lower part of the motion lever and with said seat sheet,
- said spring, which is found between said step pin pin protrusion and said second sheet opening such that it would surround said step pin, and which gets contracted with the downward movement of said motion sheet and thus said step pin and come back to its original state when said motion lever is released,
- the step pin, which is positioned between said first sheet opening and said second sheet opening found on said front support sheet, the upper part of which comes out of said first sheet opening with the downward movement of the motion sheet to which it is connected by means of said pin protrusion positioned thereon and the motion first sheet opening, and which enters into said first sheet opening when said spring is released,
- said motion sheet, to which the motion second sheet opening found at the lower part is connected such that said pull-wire connected to said second wire ball would pass through below said second wire ball, on which said motion first sheet opening is positioned on said pin protrusion, and which is pulled downward with the downward movement of said pull-wire and moves upward with the release of said spring.

The structural and characteristic features of the invention and all of its advantages shall be understood better with the figures and the detailed description given below in reference to the figures, and therefore, the assessment should be made by taking into account the said figures and detailed explanations.

### Figures for Better Understanding of the Invention

Figure 1 is a two-dimensional side section view of a preferred embodiment of the seat adjustment mechanism according to the invention.
Figure 2 is a two-dimensional view of a preferred embodiment of the seat adjustment mechanism according to the invention, in which the seat group is shown in mounted state to the seat sheet.
Figure 3 is a two-dimensional bottom view of a preferred embodiment of the seat sheet found in the seat adjustment mechanism according to the invention.
Figure 4 is a two-dimensional top view of a preferred embodiment of the seat adjustment mechanism according to the invention, in which the lever group is shown in demounted state.
Figure 5 is a two-dimensional rear view of a preferred embodiment of the lever group found in the seat adjustment mechanism according to the invention.
Figure 6 is a two-dimensional view of a preferred embodiment of the seat adjustment mechanism according to the invention, in which the front support sheet is shown in demounted state.
Figure 7 is a two-dimensional view of a preferred embodiment of the seat adjustment mechanism according to the invention, in which the front support sheet is shown in mounted state.
Figure 8 is a two-dimensional view of a preferred embodiment of the seat adjustment mechanism according to the invention, in which the seat sheet group is shown in demounted state.
Figure 9 is a two-dimensional view of a preferred embodiment of the seat adjustment mechanism according to the invention, in which the seat sheet group is shown in mounted state.

### Description of Parts References

**10.** Motion lever
   **11.** First lever opening
   **12.** Second lever opening
**20.** Lever housing
   **21.** Housing opening
**30.** Motion shaft
   **31.** Shaft connection segment
**40.** Pull-wire
   **41.** First wire ball
   **42.** Second wire ball
   **43.** Wire pipe
      **431.** First pipe protrusion
      **432.** Second pipe protrusion
**50.** Seat sheet
**60.** Plastic connection piece
**70.** Step sheet
   **71.** First sheet opening
   **72.** Second sheet opening
   **73.** Rivet
**80.** Front support sheet
   **81.** First sheet opening
   **82.** Second sheet opening
   **83.** Third sheet opening
**90.** Plastic bushing
**100.** Spring
**200.** Step pin
   **210.** Pin protrusion
**300.** Motion sheet
   **310.** Motion first sheet opening
   **320.** Motion second sheet opening

Drawings do not have to be scaled and details not necessary for understanding the present invention may be neglected. Moreover, components which are at least widely equal or which have at least widely equal functions are shown with the same number.

### Detailed Description of the Invention

In this detailed description, the preferred embodiments of the seat adjustment mechanism according to the present invention will only be disclosed for better understanding of the subject.

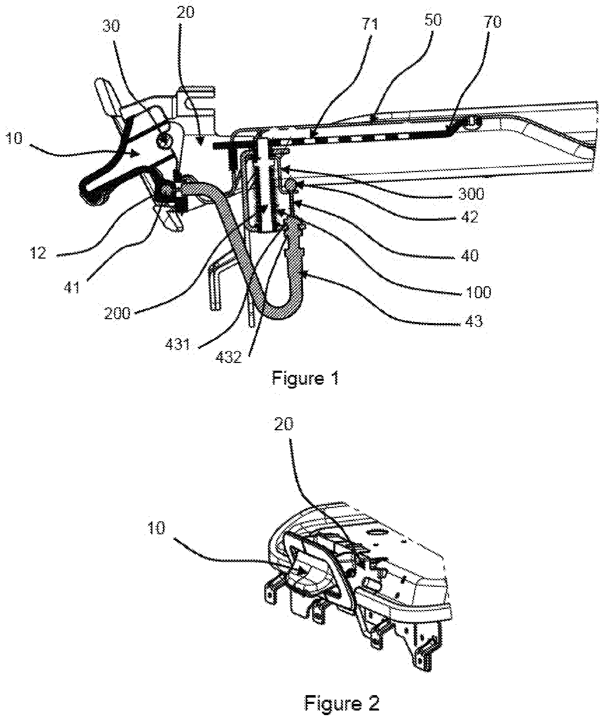

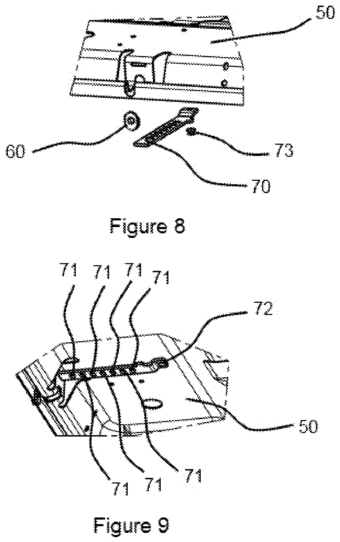

As shown in Figures 1 and 8, the seat adjustment mechanism according to the invention basically consists of a motion lever (10), a lever housing (20), a motion shaft (30), a pull-wire (40), a seat sheet (50), a plastic connection piece (60), a step sheet (70), a front support sheet (80), a plastic bushing (90), a spring (100), a step pin (200), and a motion sheet (300).

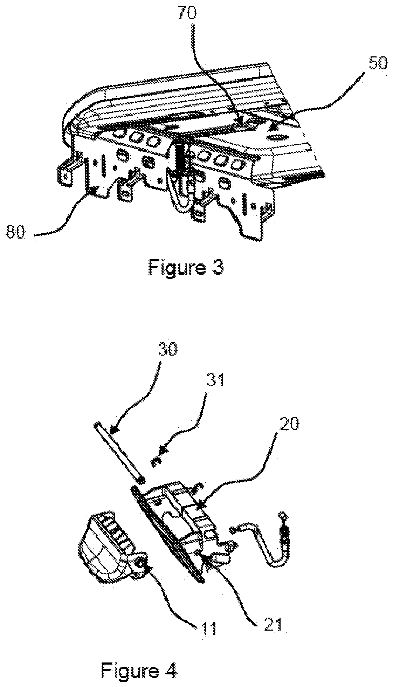

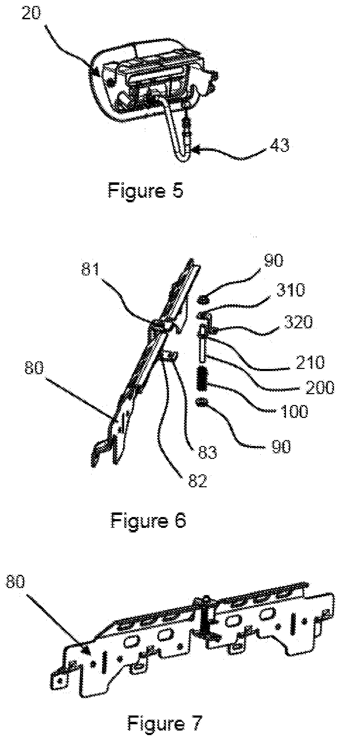

Said motion lever (10), lever housing (20), motion shaft (30), and pull-wire (40) shown in Figures 1 and 4 come together to form the lever group shown in Figure 5. Said motion lever (10) comprises a first lever opening (11) and a second lever opening (12) thereon. Moreover, said lever housing (20) also comprises a housing opening (21). Said motion shaft (30) is connected to said first lever opening (11) and housing opening (21) so that said motion lever (10) can be positioned within said lever housing (20) as shown in Figure 2. Said motion shaft (30) positions with a shaft connection segment (31) on said lever housing (20).Moreover, by means of the drive given to said motion lever (10) by the user, said motion shaft (30) enables said motion lever (10) to move around its own axis within said lever housing (20).

As can be seen in Figure 1, said motion lever (10) is connected to the first wire ball (41) positioned at the tip of said pull-wire (40), by means of said second lever opening (12) positioned thereon. By means of a plastic connection piece (60) and by passing said pull-wire (40) through said plastic connection piece (60), said pull-wire (40) is connected to a seat sheet (50) from the lower part of the first wire ball (41). Said pull-wire (40) is positioned within a wire pipe (43) having a first pipe protrusion (431) at the top and a second pipe protrusion (432) at the bottom. Said wire pipe (43) is connected to said front support sheet (80) through said first pipe protrusion (431) and second pipe protrusion (432) positioned thereon, by means of a third sheet opening (83) positioned on said front support sheet (80).

As can be seen in Figure 1, said second wire ball (42) is connected to said motion sheet (300) from the lower part of said second wire ball (42), with said connected pull-wire (40) passing through a motion second sheet opening (320) positioned at the lower part of said motion sheet (300). A step pin (200) is passed through a motion first sheet opening (310) found at the upper part of said motion sheet (300) so that it is connected to said step pin (200) at the upper part of a pin protrusion (210). Said step pin (200) is connected to said front support sheet (80) by passing through a first sheet opening (81) and a second sheet opening (82) found at the upper and lower parts of said front support sheet (80), respectively. Between said step pin (200) pin protrusion (210) and said sheet opening (2), said spring (100) is found such that it would surround said step pin (200). By means of plastic bushings (90), easy up-and-down movement of said step pin (200) is allowed on said front support sheet (80), to which it is connected.

Said step sheet (70) shown in Figure 8 is mounted on said seat sheet (50) as shown in Figure 9, by means of a rivet (73) and a second sheet opening (72) positioned thereon.

As shown in Figure 3, said front support sheet (80), on which said step pin (200), said pull-wire (40) second wire ball (42), said motion sheet (300), and said spring (100) are mounted, is mounted on a seat sheet (50) such that the upper part of said step pin (200) would pass through said first sheet opening (81) and enter into a first sheet opening (71) found on said step sheet (70).

The operating principle of the seat adjustment mechanism with the above given part locations, characteristics, and functions, and the tasks of these parts during operation are as follows:
- Said motion lever (10) driven by a user, moves upward from its location around said motion lever (30) axis it is connected to by means of said first lever opening (11) positioned thereon, and within said lever housing (20) it is connected to by means of said motion shaft (30), first lever opening (11), and housing opening (21).
- With the upward motion of said motion lever (10), said pull-wire (40), to which said first wire ball (41) found in connection with the lower part of said motion lever (10) via said second lever opening (12) and plastic connection piece (60) is connected, is pulled and thus said pull-wire (40) moves within said wire pipe (43).
- With the pulling of said pull-wire (40), said second wire ball (42) moves downward.
- With the downward motion of said second wire ball (42), said motion sheet (300) having said motion second sheet opening (320) positioned at its lower part also moves downward by means of said motion second sheet opening (320), which is positioned at the lower part of said second wire ball (42), and through which said pull-wire (40) connected to said second wire ball (42) passes.
- With the downward movement of said motion sheet (300), the step pin (200), which is connected by means of said motion first sheet opening (310) positioned on said step sheet (300) and said pin protrusion (210) positioned on said step pin (200), also moves downward.
- With the downward movement of said step pin (200), the spring (100) found between said pin protrusion (210) and said front support sheet (80) second sheet opening (82) is compressed, and the upper part of said step pin (200) comes out of said first sheet opening (71) found on said step sheet (70). In this way, said seat sheet (50) on which said step sheet (70) shown in Figure 3 is connected to said second sheet opening (72) and said rivet (73) is adjusted back-and-forth to desired position on said front support sheet (80).
- After the user adjusts said seat sheet (50) into desired position, he/she releases said motion lever (10) and said motion lever (10) moves downward.
- With the downward movement of said motion lever (10), said pull-wire (40) to which it is connected by means of said first wire ball (41) is released within said wire ball (43).
- With the release of said pull-wire (40), said contracted spring (100) comes back to its original state and said step pin (200) moves upward by means of said spring (100) left between said pin protrusion (210) and said second sheet opening (82).
- With the upward movement of said step pin (200), the motion sheet (300) to which it is connected by means of said motion first sheet opening (310) also moves upward. In this way, said pull-wire (40) connected to said motion sheet (300) by means of the motion second sheet opening (320) and second wire ball (42) also moves upward.
- With said upward movement of said step pin (200), said step pin (200) enters into said step sheet (70) first sheet opening (71) and thus said seat sheet (50) is fixed at the position adjusted by the user.

## Claims

1. A seat adjustment mechanism comprising:
- a motion lever (10) driven by a user, and on which:
∘ a first lever opening (11), enabling its rotation around a motion shaft (30), upward movement from its position within a lever housing (20) by being connected via said motion shaft (30) and a housing opening (21), and returning to its original position when the user ceases contact,
∘ a second lever opening (12) connected to a pull-wire (40) first wire ball (41)
are positioned,
- said motion shaft (30) rotating said motion lever (10) around its own axis within said lever housing (21), and the position of which is fixed by means of a shaft connection segment,
- a lever housing (20) in which said motion lever (10) is positioned via said first lever opening (11), housing opening (21), and motion shaft (30),
- a seat sheet (50), which moves forward or backward on a front support sheet (80), and to which a step sheet (70) is connected by means of a second sheet opening (72) and a rivet (73),
- said step sheet (200), on which:
∘ a first sheet opening (71), from which the upper part of a step pin (200) is removed with the downward movement of said step pin (200) and thus said seat sheet (50) is released, and into which the upper part of said step pin is inserted with the release of a spring (100) and thus said seat sheet (50) is fixed,
∘ a second sheet opening (72) providing its connection with said seat sheet (50),
∘ a rivet (73) connecting said seat sheet (50) and said second sheet opening (72)
are positioned,
- said front support sheet (80), on which:
∘ a first sheet opening (81) through which the upper part of said step pin (200) passes,
∘ a second sheet opening (82) through which the lower part of said step pin (200) passes,
∘ a third sheet opening (83) that is connected to a wire pipe (43), through which said pull-wire (40) passes, through said first pipe protrusion (431) and second pipe protrusion (432) positioned on said wire pipe (43)
are positioned, and said seat sheet (50) moves back-and-forth with the upper part of said step pin (200) entering into and coming out of said seat sheet 1 (71),
and it is **characterized in that**; said seat adjustment mechanism comprises:
- said pull-wire (40), on which:
∘ said first wire ball (41) enabling its connection with the lower part of said motion lever (10) by means an upward movement of said motion lever (10) via said second lever opening (12) and a plastic connection piece (60),
∘ a second wire ball (42) that is connected to a motion sheet (300) from the lower part, by means of a motion second sheet opening (320) positioned at the lower part of said motion sheet (300),
∘ said wire pipe (43) connected to said front support sheet (80) through said first pipe protrusion (431) and second pipe protrusion (432) positioned thereon, by means of said third sheet opening (83) positioned on said front support sheet (80)
are positioned, and which moves within said wire pipe (43) when the user drives said motion button (10) and is released when the user releases the drive,
- said plastic connection piece (60) connecting said pull-wire (5) first wire ball (41) with said second lever opening (12) found at the lower part of the motion lever (10) and with said seat sheet (50),
- said spring (100), which is found between said step pin (200) pin protrusion (210) and said second sheet opening (82) such that it would surround said step pin (200), and which gets contracted with the downward movement of said motion sheet (300) and thus said step pin (200) and come back to its original state when said motion lever (10) is released,
- the step pin (200), which is positioned between said first sheet opening (81) and said second sheet opening (82) found on said front support sheet (80), the upper part of which comes out of said first sheet opening (71) with the downward movement of the motion sheet (300) to which it is connected by means of said pin protrusion (210) positioned thereon and the motion first sheet opening (310), and which enters into said first sheet opening (71) when said spring (100) is released,
- said motion sheet (300), to which the motion second sheet opening (320) found at the lower part is connected such that said pull-wire (40) connected to said second wire ball (42) would pass through below said second wire ball (42), on which said motion first sheet opening (310) is positioned on said pin protrusion (210), and which is pulled downward with the downward movement of said pull-wire (50) and moves upward with the release of said spring (100).

2. The seat adjustment mechanism according to Claim 1, **characterized in that**; it comprises a plastic bushing (90) allowing easy movement of said step pin (200).

## Patentansprüche

1. Sitzeinstellmechanismus, umfassend:
- einen Bewegungshebel (10), der von einem Nutzer betrieben wird, und an dem:
eine erste Hebelöffnung (11), die ihre Drehung um einen Bewegungsschaft (30), eine von ihrer Position in einem Hebelgehäuse (20) nach oben gerichtete Bewegung ermöglicht, indem sie über den Bewegungsschaft (30) und eine Gehäuseöffnung (21) verbunden ist, und die in ihre Ausgangsposition zurückkehrt, wenn der Nutzer den Kontakt aufgibt, eine zweite Hebelöffnung (12), die mit einer ersten Zugdraht (40) Drahtkugel (41) verbunden ist, positioniert sind,
- wobei der Bewegungsschaft (30) den Bewegungshebel (10) in dem Hebelgehäuse (21) um seine eigene Achse dreht, und dessen Position mittels eines Schaftverbindungssegments fest ist;
- ein Hebelgehäuse (20), in dem der Bewegungshebel (10) über die erste Hebelöffnung (11), Gehäuseöffnung (21) und Bewegungsschaft (30) positioniert ist,
- eine Sitzplatte (50), die sich auf einer vorderen Trägerplatte (80) nach vorne oder hinten bewegt und mit der mithilfe einer zweiten Plattenöffnung (72) und einer Niete (73) eine Trittplatte (70) verbunden ist,
- die Trittplatte (200), an der:
eine erste Plattenöffnung (71), von der der obere Teil eines Trittstifts (200) mit der nach unten gerichteten Bewegung des Trittstifts (200) entfernt wird und somit die Sitzplatte (50) freigegeben wird, und in die der obere Teil des Trittstifts mit Freigabe einer Feder (100) eingeführt wird und die Sitzplatte (50) somit befestigt wird, eine zweite Plattenöffnung (72), die ihre Verbindung zur Sitzplatte (50) bereitstellt, eine Niete (73), die die Platte (50) und die zweite Plattenöffnung (72) verbindet, positioniert sind,- die vordere Trägerplatte (80), an der:
eine erste Plattenöffnung (81), durch die der obere Teil des Trittstifts (200) verläuft, eine zweite Plattenöffnung (82), durch die der untere Teil des Trittstifts (200) verläuft, eine dritte Plattenöffnung (83), die mit einem Drahtrohr (43), durch das der der Zugdraht (40) verläuft, durch den ersten Rohrvorsprung (431) und den zweiten Rohrvorsprung (432), die an dem Drahtrohr (43) positioniert sind, verbunden ist,positioniert sind und die Sitzplatte (50) sich nach hinten und vorne bewegt, wobei der obere Teil des Trittstifts (200) in die Sitzplatte 1 (71) eintritt und aus ihr herauskommt, und **dadurch gekennzeichnet, dass** der Einstellmechanismus Folgendes umfasst:
- den Zugdraht (40), an dem:
die erste Drahtkugel (41) ihre Verbindung mit dem unteren Teil des Bewegungshebels (10) mittels einer nach oben gerichteten Bewegung des Bewegungshebels (10) über die zweite Hebelöffnung (12) und ein Kunststoffverbindungsstück (60) ermöglicht, eine zweite Drahtkugel (42), die mit einer Bewegungsplatte (300) vom unteren Teil mittels einer zweiten Bewegungsplattenöffnung (320), die am unteren Teil der Bewegungsplatte (300) positioniert ist, verbunden ist, wobei das Drahtrohr (43) durch den daran positionierten ersten Rohrvorsprung (431) und den daran positionierten zweiten Rohrvorsprung (432) mit der vorderen Trägerplatte (80) verbunden ist, mittels der an der vorderen Trägerplatte (80) positionierten dritten Plattenöffnung (83) positioniert sind, und die sich innerhalb des Drahtrohrs (43) bewegt, wenn der Nutzer die Bewegungstaste (10) antreibt, und die freigegeben wird, wenn der Nutzer den Antrieb freigibt,
- wobei das Kunststoffverbindungsstück (60), das die erste Drahtzug (5) Drahtkugel (41) mit der am unteren Teil des Bewegungshebels (10) befindlichen zweiten Hebelöffnung (12) und mit der Sitzplatte (50) verbindet,
- die Feder (100), die sich am Trittstift (200) Stiftvorsprung (210) befindet, und die zweite Plattenöffnung (82), so dass sie den Trittstift (200) umgeben würde, und die mit der nach unten gerichteten Bewegung der Bewegungsplatte (300) kontraktiert wird und somit der Trittstift (200) in seinen Ausgangszustand zurückkommt, wenn der Bewegungshebel (10) freigegeben wird,
- der Trittstift (200), der zwischen der an der vorderen Trägerplatte (80) befindlichen ersten Plattenöffnung (81) und der zweiten Plattenöffnung (82) positioniert ist, dessen oberer Teil mit der nach unten gerichteten Bewegung der Bewegungsplatte (300), mit der er mittels des daran positionierten Stiftvorsprungs (210) und der ersten Bewegungsplattenöffnung (310) verbunden ist, aus der ersten Plattenöffnung (71) herauskommt und der in die erste Plattenöffnung (71) eintritt, wenn die Feder (100) freigegeben wird,
- die Bewegungsplatte (300), mit der die am unteren Teil befindliche zweite Bewegungsplattenöffnung (320) verbunden ist, so dass der mit der zweiten Drahtkugel (42) verbundene Zugdraht (40) unter der zweiten Drahtkugel (42) durchlaufen würde, an der die erste Bewegungsplattenöffnung (310) am Stiftvorsprung (210) positioniert ist und die mit der nach unten gerichteten Bewegung des Drahtzugs (50) nach unten gezogen wird und sich mit der Freigabe der Feder (100) nach oben bewegt.

2. Sitzeinstellmechanismus nach Anspruch 1, **dadurch gekennzeichnet, dass** er eine Kunststoffbuchse (90) umfasst, die eine einfache Bewegung des Trittstifts (200) ermöglicht.

## Revendications

1. Mécanisme de réglage de siège comprenant :
- un levier de mouvement (10) actionné par un utilisateur, et sur lequel sont positionnés :
une première ouverture de levier (11) permettant sa rotation autour d'un arbre de mouvement (30), un mouvement vers le haut depuis sa position dans un boîtier de levier (20) en étant raccordé par l'intermédiaire dudit arbre de mouvement (30) et une ouverture de boîtier (21) et retournant à sa position initiale lorsque l'utilisateur cesse le contact,
une seconde ouverture de levier (12) raccordée à une première bille de câble (41) du câble de traction (40),
- ledit arbre de mouvement (30) tournant ledit levier de mouvement (10) autour de son propre axe dans ledit boîtier de levier (21) et dont ladite position est fixée au moyen d'un segment de raccord d'arbre,
- un boîtier de levier (20) dans lequel ledit levier de mouvement (10) est positionné par l'intermédiaire de ladite première ouverture de levier (11), l'ouverture de boîtier (21) et l'arbre de mouvement (30),
- une plaque de siège (50) se déplaçant vers l'avant ou vers l'arrière sur une plaque de support avant (80), et à laquelle une plaque de crans (70) est raccordée au moyen d'une seconde ouverture de plaque (72) et un rivet (73),
- ladite plaque de crans (200), sur laquelle sont positionnés :
une première ouverture de plaque (71), à partir de laquelle la partie supérieure d'une goupille de cran (200) est retirée à l'aide du mouvement vers le bas de la goupille de cran (200) et ladite plaque de siège (50) se trouve ainsi libérée et dans laquelle la partie supérieure de ladite goupille de cran est insérée en libérant un ressort (100) et ladite plaque de siège (50) étant ainsi fixée,
une deuxième ouverture de plaque (72) fournissant son raccord à la plaque de siège (50),
un rivet (73) raccordant ladite plaque de siège (50) et ladite seconde ouverture de plaque (72),
- ladite plaque de support avant (80), sur laquelle sont positionnées :
une première ouverture de plaque (81) à travers laquelle la partie supérieure de ladite goupille de cran (200) passe,
une deuxième ouverture de plaque (82) à travers laquelle la partie inférieure de ladite goupille de cran (200) passe,
une troisième ouverture de plaque (83) qui est raccordée à un conduit de câble (43), à travers lequel ledit câble de traction (40) passe, à travers ladite première saillie de conduit (431) et ladite seconde saillie de conduit (432) positionnées sur ledit conduit de câble (43),
et ladite plaque de siège (50) se déplaçant vers l'avant et vers l'arrière, ladite partie supérieure de ladite goupille de cran (200) entrant dans ladite plaque de siège 1 (71) et sortant de celle-ci,
et **caractérisé en ce que** ; ledit mécanisme de réglage de siège comprend :
- ledit câble de traction (40), sur lequel sont positionnés :
ladite première bille de câble (41) permettant son raccord avec la partie inférieure dudit levier de mouvement (10) au moyen d'un mouvement vers le haut dudit levier de mouvement (10) par l'intermédiaire de ladite seconde ouverture de levier (12) et une pièce de raccord en plastique (60),
une seconde bille de câble (42) qui est raccordé à une plaque de mouvement (300) depuis la partie inférieure, au moyen d'un mouvement de la seconde ouverture de plaque (320) positionnée au niveau de la partie inférieure de ladite plaque de mouvement (300),
ledit conduit de câble (43) raccordé à ladite plaque de support avant (80) par la première saillie de conduit (431) et ladite seconde saillie de conduit (432) positionnées sur celle-ci au moyen de ladite troisième ouverture (83) positionnée sur ladite plaque de support avant (80), et qui se déplace dans ledit conduit de câble (43) lorsque l'utilisateur actionne ledit bouton de mouvement (10) et est libéré lorsque l'utilisateur ne l'actionne plus,
- ladite pièce de raccord en plastique (60) raccordant ladite première bille de câble (41) du câble de traction (5) avec ladite seconde ouverture de levier (12) se trouvant au niveau de la partie inférieure du levier de mouvement (10) et avec la plaque de siège (50),
- ledit ressort (100) qui se trouve entre ladite saillie de goupille (210) de ladite goupille de cran (200) et ladite deuxième ouverture de plaque (82) de façon à ce qu'il entoure ladite goupille de cran (200) et qui se contracte avec le mouvement vers le bas du ladite plaque de mouvement (300) et de ladite goupille de cran (200) et revient à son état initial lorsque ledit levier de mouvement (10) est libéré ,
- la goupille de cran (200), qui est positionnée entre ladite première ouverture de plaque (81) et ladite deuxième ouverture de plaque (82) se trouve sur ladite plaque de support avant (80), sa partie supérieure sort de ladite première ouverture de plaque (71) à l'aide du mouvement vers le bas de la plaque de mouvement (300) à laquelle il est raccordé au moyen de ladite saillie de goupille (210) positionnée sur celle-ci et la première ouverture de plaque (310) de mouvement et qui entre dans ladite première ouverture de plaque (71) lorsque ledit ressort (100) est libéré,
- ladite plaque de mouvement (300) à laquelle ladite seconde ouverture de plaque de mouvement (320) se trouvant au niveau de la partie inférieure est raccordée de sorte que ledit câble de traction (40) raccordé à ladite seconde bille de câble (42) traverse sous ladite seconde bille de câble (42), sur laquelle ladite première ouverture de plaque (310) de mouvement est positionnée sur ladite saillie de goupille (210) et qui est tiré vers le bas avec le mouvement vers le bas dudit câble de traction (50) et se déplace vers le haut avec la libération du ressort (100).

2. Mécanisme de réglage de siège selon la revendication 1, **caractérisé en ce qu'**il comprend une bague en plastique (90) permettant un mouvement facile de ladite goupille de cran (200).
